# EUROPEAN PATENT SPECIFICATION

(11) **EP 3 040 392 B1**
(45) Date of publication and mention of the grant of the patent: **17.01.2018**
(21) Application number: 14840359.5
(22) Date of filing: 01.08.2014
(51) Int. Cl.: C09J 201/00, C08K 3/08, C08L 33/08, C08L 101/00, C09J 11/06, C09J 133/00, H01B 1/22, C09J 133/08, C09J 9/02

(54) **ELECTRICALLY CONDUCTIVE JOINING COMPOSITION, ELECTRICALLY CONDUCTIVE JOINING SHEET, ELECTRONIC COMPONENT, AND PRODUCTION METHOD FOR SAME**
ELEKTRISCH LEITFÄHIGE VERBINDUNGSZUSAMMENSETZUNG, ELEKTRISCH LEITFÄHIGE VERBINDUNGSFOLIE, ELEKTRONISCHES BAUTEIL UND HERSTELLUNGSVERFAHREN DAFÜR
COMPOSITION LIANTE ÉLECTROCONDUCTRICE, FEUILLE LIANTE ÉLECTROCONDUCTRICE, COMPOSANT ÉLECTRONIQUE ET PROCÉDÉ DE PRODUCTION DE CES DERNIERS

(30) Priority: 27.08.2013 JP 2013175779
(43) Date of publication of application: 06.07.2016
(73) Proprietor: Nitto Denko Corporation, Ibaraki-shi, Osaka 567-8680 (JP)
(72) Inventor: FURUKAWA, Yoshihiro, Ibaraki-shi Osaka 567-8680 (JP); EBE, Hirofumi, Ibaraki-shi Osaka 567-8680 (JP)
(74) Representative: Hoffmann Eitle
(86) International application number: PCT/JP2014/070370
(87) International publication number: WO 2015/029696

(56) References cited:
- JP-A- 2005 059 028
- JP-A- 2005 194 306
- JP-A- 2008 111 990

## Description

### TECHNICAL FIELD

The present invention relates to an electrically conductive joining composition, an electrically conductive joining sheet, an electronic component, and a producing method thereof, to be specific, to an electrically conductive joining composition, an electrically conductive joining sheet formed from the electrically conductive joining composition, a producing method of an electronic component using the electrically conductive joining sheet, and an electronic component obtained by the producing method.

### BACKGROUND ART

It has been conventionally known that, in view of no environmental pollution for free of lead and no application of thermal load to an electronic component or a board for low melting properties, a solder member containing solder particles composed of a tin-bismuth solder or the like is used for producing and mounting an electronic component in joining of terminals in a wired circuit board or the like (ref: for example, Patent Document 1).

Patent document 1 describes an adhesive tape that includes a resin layer containing a thermosetting resin, a solder powder, and a curing agent and in which the resin layer has a melt viscosity of 50 Pa·s or more and 5000 Pa·s or less.

### Citation List

### Patent Document

Patent Document 1: WO2008/023452

### SUMMARY OF THE INVENTION

### PROBLEM TO BE SOLVED BY THE INVENTION

In Patent Document 1, by allowing the resin layer to have a low viscosity, the self-aggregation in which solder particles migrate to electrode terminals at the time of joining members are promoted and as a result, the two electrode terminals are joined to improve the electrically conductive properties.

However, in the adhesive tape in Patent Document 1, there is a disadvantage that the fluidity of the thermosetting resin extremely becomes high at the time of joining the members, so that the thermosetting resin flows to the outside of the members. Also, there is a disadvantage that the solder particles extremely wet and spread on the joining interfaces of the members, so that the adhesive area of the thermosetting resin that develops the joining strength to the members is insufficient. As a result, the joining strength between the two members is reduced.

It is an object of the present invention to provide an electrically conductive joining composition, an electrically conductive joining sheet, and an electronic component that ensure the electrically conductive properties and have excellent joining strength and a method for producing an electronic component.

### MEANS FOR SOLVING THE PROBLEM

An electrically conductive joining composition of the present invention contains a solder particle and a resin component containing a thermosetting resin, a thermoplastic resin and a curing agent, wherein the viscosity of the resin component at the melting point of the solder particle is 8000 Pa·s or more, the volume content of the thermoplastic resin with respect to the resin component is 60% by volume or more, and the viscosity is measured by using a dynamic viscoelasticity measuring device under the conditions of a shear mode, a frequency of 0.1 Hz, and a temperature rising rate of 10°C/min.

In the electrically conductive joining composition of the present invention, it is preferable that the thermoplastic resin is an acrylic rubber.

In the electrically conductive joining composition of the present invention, it is preferable that the thermosetting resin is an epoxy resin.

In the electrically conductive joining composition of the present invention, it is preferable that the epoxy resin is a bisphenol epoxy resin and a novolak epoxy resin.

In the electrically conductive joining composition of the present invention, it is preferable that the solder particle has an average particle size of 1 µm or more and 100 µm or less.

In the electrically conductive joining composition of the present invention, it is preferable that the solder particle is made of a tin-bismuth alloy.

In the electrically conductive joining composition of the present invention, it is preferable that the surface of the solder particle is covered with an organic acid.

An electrically conductive joining sheet of the present invention is formed from the above-described electrically conductive joining composition into a sheet shape.

In the electrically conductive joining sheet of the present invention, it is preferable that one solder particle is present in a thickness direction of the electrically conductive joining sheet.

A method for producing an electronic component of the present invention includes the steps of preparing a laminate having the above-described electrically conductive joining sheet disposed between two pieces of wired circuit boards having the respective terminals disposed in opposed relation at spaced intervals to each other; compression-bonding the laminate, while heating the laminate at a temperature of less than the melting point of the solder particle and less than the curing temperature of the thermosetting resin; and compression-bonding the laminate, while heating the laminate at a temperature of the melting point or more of the solder particle and the curing temperature or more of the thermosetting resin.

An electronic component of the present invention is obtained by the above-described method for producing an electronic component.

### EFFECT OF THE INVENTION

The electrically conductive joining composition of the present invention contains the solder particle and the resin component containing the thermosetting resin, a thermoplastic resin and the curing agent, and the viscosity of the resin component at the melting point of the solder particle is 8000 Pa·s or more, the volume content of the thermoplastic resin with respect to the resin component is 60% by volume or more, and the viscosity is measured by using a dynamic viscoelasticity measuring device under the conditions of a shear mode, a frequency of 0.1 Hz, and a temperature rising rate of 10°C/min. Thus, the electrically conductive properties of the electrically conductive joining composition or the electronic component that is joined by a sheet formed from the electrically conductive joining composition are ensured, and the joining strength in a joining portion of the electronic component is excellent.

In the method for producing an electronic component of the present invention, the electrically conductive joining sheet is used. Thus, the two pieces of wired circuit boards can be easily joined and the solder joining portions that electrically connect each of the terminals can be surely joined.

The electronic component of the present invention has excellent electrically conductive properties and excellent joining strength.

### BRIEF DESCRIPTION OF THE DRAWINGS

[FIG. 1] FIGS. 1A to ID show process drawings for illustrating one embodiment of a method for producing an electronic component of the present invention:
FIG. 1A illustrating a step of preparing an electrically conductive joining sheet and wired circuit boards,
FIG. 1B illustrating a step of laminating the electrically conductive joining sheet and the wired circuit boards,
FIG. 1C illustrating a step of temporarily compression-bonding the electrically conductive joining sheet to the wired circuit boards, and
FIG. ID illustrating a step of fully compression-bonding the electrically conductive joining sheet to the wired circuit boards.
[FIG. 2] FIG. 2 shows an SEM image of a sectional view of a laminate obtained in a connection evaluation test using an electrically conductive joining sheet of Example 1 of the present invention.
[FIG. 3] FIG. 3 shows an SEM image of a sectional view of a laminate obtained in a connection evaluation test using an electrically conductive joining sheet of Comparative Example 1 of the present invention.
[FIG. 4] FIG. 4 shows an SEM image of a sectional view of a laminate obtained in a connection evaluation test using an electrically conductive joining sheet of Comparative Example 3 of the present invention.

### DESCRIPTION OF EMBODIMENTS

An electrically conductive joining composition of the present invention contains a solder particle and a resin component.

In view of environmental suitability, an example of the solder particle includes a solder material that fails to contain lead (lead-free solder material). To be specific, an example thereof includes a tin alloy such as a tin-bismuth alloy (Sn-Bi) and a tin-silver-copper alloy (Sn-Ag-Cu). In view of low temperature joining, preferably, a tin-bismuth alloy is used.

These solder particles may be used alone or in combination of two or more.

The tin content in the tin-bismuth alloy is, for example, 10 mass% or more, or preferably 25 mass% or more, and, for example, 50 mass% or less, or preferably 45 mass% or less. The bismuth content is, for example, 50 mass% or more, or preferably 55 mass% or more, and, for example, 90 mass% or less, or preferably 75 mass% or less.

The solder material has the melting point (the melting point of the solder particle) of, for example, 240°C or less, preferably 200°C or less, or more preferably 180°C or less, and, for example, 100°C or more, preferably 120°C or more, or more preferably 130°C or more. The melting point of the solder material can be obtained by differential scanning calorimetry (DSC).

A shape of the solder particle is not particularly limited. Examples of the shape thereof include a sphere shape, a plate shape, and a needle shape. Preferably, a sphere shape is used.

The solder particle has an average particle size of, for example, 1 µm or more, or preferably 5 µm or more, and, for example, 100 µm or less, or preferably 50 µm or less. When the average particle size of the solder particle is not less than the above-described lower limit, sufficient electrically conductive properties can be obtained in a solder joining portion. Meanwhile, when the average particle size of the solder particle is not more than the above-described upper limit, a short circuit of terminals that are adjacent to each other via the solder particle can be prevented in a minute wired circuit board.

The average particle size of the solder particle is obtained by measurement using a laser diffraction scattering particle size distribution meter.

Preferably, a surface of the solder particle is covered with an organic acid.

Examples of the organic acid include aliphatic carboxylic acids such as propionic acid, myristic acid, palmitic acid, malonic acid, succinic acid, adipic acid, suberic acid, sebacic acid, oleic acid, abietic acid, ascorbic acid, and citric acid and aromatic carboxylic acids such as benzoic acid, 2-phenoxy benzoic acid, phthalic acid, diphenylacetic acid, trimellitic acid, and pyromellitic acid.

These organic acids may be used alone or in combination of two or more.

The surface of the solder particle is covered with the organic acid, so that an oxide film on the surface of the solder particle and an oxide film on a surface of an electrode joined to the solder particle are removed, and the solder particle can be further more surely melted at the melting point of the solder material to be alloyed with the electrode.

The volume content of the solder particle in the electrically conductive joining composition is, for example, 1 % by volume or more, preferably 2% by volume or more, or more preferably 3% by volume or more, and, for example, 80% by volume or less, preferably 50% by volume or less, or more preferably 30% by volume or less.

When the volume content of the solder particle is not less than the above-described lower limit, sufficient electrically conductive properties can be obtained in the solder joining portion. Meanwhile, when the volume content of the solder particle is not more than the above-described upper limit, sheet-forming of the electrically conductive joining composition can be easily achieved.

The resin component contains a thermosetting resin, a thermoplastic resin and a curing agent.

Examples of the thermosetting resin include an epoxy resin, an oxetane resin, a thermosetting (meth)acrylic resin, a diallyl phthalate resin, thermosetting polyester, and a maleimide resin. Preferably, an epoxy resin is used.

Examples of the epoxy resin include aromatic epoxy resins such as bisphenol epoxy resin (for example, bisphenol A epoxy resin, bisphenol F epoxy resin, bisphenol S epoxy resin, hydrogenated bisphenol A epoxy resin, dimer acid-modified bisphenol epoxy resin), novolak epoxy resin (for example, phenol novolak epoxy resin, cresol novolak epoxy resin, biphenyl epoxy resin), naphthalene epoxy resin, fluorene epoxy resin (for example, bisaryl fluorene epoxy resin), and triphenyl methane epoxy resin (for example, trishydroxyphenylmethane epoxy resin); nitrogen ring-containing epoxy resins such as triepoxypropylisocyanurate (triglycidylisocyanurate) and hydantoin epoxy resin; aliphatic epoxy resins; alicyclic epoxy resins (for example, dicyclo ring-type epoxy resin); glycidylether epoxy resins; and glycidylamine epoxy resins.

These thermosetting resins may be used alone or in combination of two or more.

As the epoxy resin, preferably, aromatic epoxy resins are used, more preferably, a bisphenol epoxy resin and a novolak epoxy resin are used, or particularly preferably, a bisphenol A epoxy resin and a cresol novolak epoxy resin are used.

Preferably, a bisphenol epoxy resin and a novolak epoxy resin are used in combination, or more preferably, a bisphenol A epoxy resin and a cresol novolak epoxy resin are used in combination. By selecting these combinations as the epoxy resin, excellent forming properties, excellent flexibility, and excellent heat resistance can be achieved.

The epoxy equivalent of the epoxy resin is, for example, 80 g/eq or more, or preferably 100 g/eq or more, and, for example, 500 g/eq or less, or preferably 400 g/eq or less.

The temperature at which the thermosetting resin cures is determined in accordance with the kind of the thermosetting resin and that of a thermosetting catalyst, and is, for example, 140°C or more, or preferably 145°C or more, and, for example, 250°C or less, or preferably 230°C or less.

The volume content of the thermosetting resin in the resin component is, for example, 1% by volume or more, preferably 3% by volume or more, or more preferably 5% by volume or more, and, for example, 45% by volume or less, preferably 35% by volume or less, or more preferably 25% by volume or less. By setting the volume content within this range, the joining strength can be further more excellent.

When the thermosetting resin uses the bisphenol epoxy resin and the novolak resin in combination, in particular, the volume content of the bisphenol epoxy resin with respect to 100 parts by volume of the novolak resin is, for example, 150% by volume or more, or preferably 200% by volume or more, and, for example, 500% by volume or less, or preferably 300% by volume or less.

The curing agent is appropriately determined in accordance with the kind of the thermosetting resin. Examples thereof include a phenol resin, amines, and thiols. Preferably, a phenol resin is used.

Examples of the phenol resin include a novolak phenol resin obtained by condensation of phenol and formaldehyde under an acid catalyst and a phenol aralkyl resin synthesized from phenol and dimethoxy paraxylene or bis(methoxymethyl) biphenyl.

These curing agents may be used alone or in combination of two or more.

The hydroxyl equivalent of the phenol resin is, for example, 10 g/eq or more, or preferably 50 g/eq or more, and, for example, 500 g/eq or less, or preferably 400 g/eq or less.

The volume content of the curing agent in the resin component is, for example, 1% by volume or more, preferably 3% by volume or more, or more preferably 5% by volume or more, and, for example, 50% by volume or less, preferably 40% by volume or less, or more preferably 30% by volume or less.

The resin component contains a thermoplastic resin.

Examples of the thermoplastic resin include rubber such as an acrylic rubber and a polybutadiene; a styrene-butadiene-styrene copolymer, a polyolefin (for example, polyethylene, polypropylene and ethylene-propylene copolymer), a phenoxy resin, a polyester resin, thermoplastic polyurethane, a thermoplastic polyimide, a thermoplastic polyamide (nylon (registered trademark)), and a polyacetal resin.

These copolymerizable monomers may be used alone or in combination of two or more.

Preferably, rubber is used, or more preferably, an acrylic rubber is used. By containing the rubber, the viscosity of the resin component can be easily adjusted.

The acrylic rubber is a synthetic rubber obtained by polymerization of a monomer containing an alkyl (meth)acrylate.

The alkyl (meth)acrylate is an alkyl methacrylate and/or an alkyl acrylate. An example thereof includes an alkyl (meth)acrylate containing a straight-chain or branched-chain alkyl portion having 1 to 10 carbon atoms such as methyl (meth)acrylate, ethyl (meth)acrylate, butyl (meth)acrylate, hexyl (meth)acrylate, 2-ethylhexyl (meth)acrylate, and nonyl (meth)acrylate. Preferably, an alkyl (meth)acrylate containing a straight-chain alkyl portion having 2 to 8 carbon atoms is used.

The mixing ratio of the alkyl (meth)acrylate with respect to the monomer is, for example, 50 mass% or more, or preferably 75 mass% or more, and, for example, 99 mass% or less.

The monomer can also contain a copolymerizable monomer that is capable of copolymerizing with the alkyl (meth)acrylate.

The copolymerizable monomer has a vinyl group. Examples thereof include a cyano group-containing vinyl monomer such as (meth)acrylonitrile and an aromatic vinyl monomer such as styrene.

The mixing ratio of the copolymerizable monomer with respect to the monomer is, for example, 50 mass% or less, or preferably 25 mass% or less, and, for example, 1 mass% or more.

The acrylic rubber may include a functional group that is bonded to the end or the middle of the main chain thereof so as to increase the adhesive force. Examples of the functional group include a carboxyl group and a hydroxyl group.

The acrylic rubber has a weight average molecular weight Mw of, for example, 50000 or more, or preferably 100000 or more, and, for example, 2000000 or less, or preferably 1500000 or less. The weight average molecular weight (calibrated with standard polystyrene) of the acrylic rubber is calculated with GPC.

The acrylic rubber has a glass transition temperature Tg of, for example, -100°C or more, or preferably -50°C or more, and, for example, 100°C or less, or preferably 50°C or less. The glass transition temperature of the acrylic rubber is, for example, calculated by an intermediate point glass transition temperature after heat treatment measured based on JIS K7121-1987 or a theoretical calculated value. When the glass transition temperature thereof is measured based on JIS K7121-1987, to be specific, the glass transition temperature is calculated with differential scanning calorimetry (heat flux DSC) at a temperature rising rate of 10°C/min.

The volume content of the thermoplastic resin in the resin component is 60% by volume or more, preferably 65% by volume or more, more preferably 70% by volume or more, or further more preferably 75% by volume or more, and, for example, 95% by volume or less, or preferably 90% by volume or less. By setting the volume content within this range, the viscosity of the resin component can be easily adjusted.

The resin component preferably contains a thermosetting catalyst.

The thermosetting catalyst is a catalyst that promotes curing of the thermosetting resin by heating. Examples thereof include a salt having a triphenylborane structure, a salt having a triphenylphosphine structure, a salt having an imidazole skeleton, and an amino group-containing compound. Preferably, a salt having a triphenylborane structure is used.

An example of the salt having a triphenylborane structure includes tri(p-methylphenyl) borane. An example of the salt having a triphenylborane structure also includes a salt further having a triphenylphosphine structure. Examples of the salt having a triphenylphosphine structure and a triphenylborane structure include tetraphenylphosphonium tetraphenylborate (trade name: TPP-K), tetraphenylphosphonium tetra-p-triborate (trade name: TPP-MK), benzyltriphenylphosphonium tetraphenylborate (trade name: TPP-ZK), and triphenylphosphine triphenylborane (trade name: TPP-S) (all of the above-described trade names are manufactured by HOKKO CHEMICAL INDUSTRY CO., LTD.).

These thermosetting catalysts may be used alone or in combination of two or more.

The volume content of the thermosetting catalyst in the resin component is, for example, 0.1% by volume or more, or preferably 0.2% by volume or more, and, for example, 10% by volume or less, or preferably 5% by volume or less.

The resin component can also contain another additive such as a filler, a curing accelerator, and a coupling agent as needed.

The volume content of the resin component in the electrically conductive joining composition is, for example, 20% by volume or more, preferably 50% by volume or more, or more preferably 70% by volume or more, and, for example, 99% by volume or less, preferably 98% by volume or less, or more preferably 97% by volume or less.

The viscosity of the resin component at the melting point of the solder particle is 8000 Pa·s or more, preferably 10000 Pa·s or more, or more preferably 12000 Pa·s or more, and, for example, 90000 Pa·s or less, or preferably 60000 Pa·s or less.

When the viscosity of the resin component is less than the above-described lower limit, at the time of solder joining, it is difficult for the electrically conductive joining composition to retain the sheet shape thereof, so that the solder particle and the resin component flow to the outside between the two pieces of joining members (for example, two pieces of wired circuit boards). Also, the solder particle extremely wets and spreads on the interfaces of the joining members, so that the adhesive area of the resin component with the joining members is reduced. Thus, the joining strength between the joining members by the resin component is reduced. Meanwhile, when the viscosity of the resin component is above the above-described upper limit, the resin component easily remains on the interface between the solder particle and the joining members at the time of joining and interferes the metal joining of the solder to the joining members. Thus, there is a possibility of being incapable of obtaining the electrically conductive properties between the two pieces of joining members.

The viscosity of the resin component is measured by measuring the dynamic viscosity using a dynamic viscoelasticity measuring device under the conditions of a shear mode, a frequency of 0.1 Hz, and a temperature rising rate of 10°C/min.

The electrically conductive joining composition is obtained by mixing the components and the solder particle that constitute the resin component. Also, a solvent is blended with the resin component and the solder particle in an appropriate order as needed, so that an electrically conductive joining composition-containing solvent (varnish) is prepared. Thereafter, the obtained electrically conductive joining composition-containing solvent can be dried to obtain the electrically conductive joining composition.

An example of the solvent includes an organic solvent including ketones such as acetone and methyl ethyl ketone (MEK); aromatic hydrocarbons such as toluene, xylene, and ethyl benzene; esters such as ethyl acetate, and amides such as N,N-dimethylformamide. These solvents may be used alone or in combination of two or more.

A drying temperature is, for example, 40°C or more, or preferably 50°C or more, and, for example, 135°C or less, or preferably 130°C or less.

The electrically conductive joining composition can be, for example, used as an electrically conductive joining sheet that is formed into a sheet shape.

The electrically conductive joining sheet can be, for example, produced by preparing an electrically conductive composition-containing solvent that contains a resin component, a solder particle, and a solvent to be then applied to and dried on a board.

To be specific, first, for example, a resin component-containing solvent that contains the resin component and the solvent (described above) is prepared.

A resin component solution may be, for example, prepared by mixing the solvent in the resin component, or by using a resin solvent that is prepared by blending a thermosetting resin in the solvent in advance as a raw material.

In the present invention, when the thermoplastic resin is contained in the resin component, preferably, the electrically conductive joining sheet is produced using a thermoplastic resin-containing solution.

When the thermoplastic resin-containing solution is used, the thermoplastic resin content (solid content) with respect to the thermoplastic resin solution is, for example, 1% by volume or more, or preferably 5% by volume or more, and, for example, 50% by volume or less, or preferably 30% by volume or less.

The solid content (proportion excluding the solvent) of the resin component in the resin component-containing solvent is, for example, 5% by volume or more, or preferably 10% by volume or more, and, for example, 35% by volume or less, or preferably 30% by volume or less.

Next, the solder particle is blended in the resin component-containing solvent, thereby preparing the electrically conductive joining composition-containing solvent.

Thereafter, the electrically conductive joining composition-containing solvent is applied to a board with an applicator to be then dried.

A drying temperature is, for example, 40°C or more, or preferably 50°C or more, and, for example, 135°C or less, or preferably 130°C or less.

In this manner, the electrically conductive joining sheet is obtained.

The electrically conductive joining sheet has a thickness of, for example, 1 µm or more, or preferably 5 µm or more, and, for example, 200 µm or less, or preferably 150 µm or less. When the thickness thereof is below the above-described range, the joining strength may be insufficient. Meanwhile, when the thickness thereof is above the above-described range, there may be a case where the resin component erodes the solder joining portion and the electrically conductive properties are reduced.

In the electrically conductive joining sheet, one to five solder particles are present; preferably one to three solder particles are present; or more preferably one solder particle is present in a thickness direction. In this manner, the joining members can be further more surely electrically conducted.

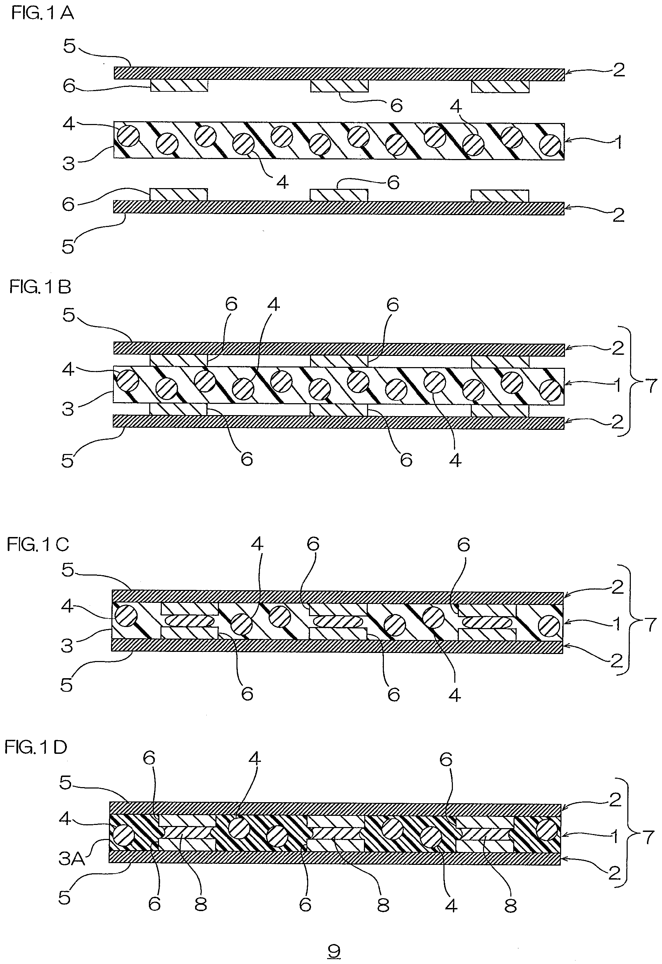

Next, a method for producing an electronic component using the electrically conductive joining sheet is described with reference to FIGS. 1A to 1D.

In this method, first, as shown in FIG. 1A, an electrically conductive joining sheet 1 and two pieces of wired circuit boards 2 as joining members are prepared.

The electrically conductive joining sheet 1 includes a resin component 3 and a solder particle 4 that is dispersed in the resin component 3. One solder particle 4 is present in the resin component 3 in the thickness direction of the electrically conductive joining sheet 1.

Each of the wired circuit boards 2 includes a board 5 and a wired circuit that is provided on the surface thereof and has terminals 6. The board 5 is formed into a flat plate shape and is formed of an insulating board. A plurality of terminals 6 are made of a metal and disposed at spaced intervals to each other. The terminal 6 has the maximum length of, for example, 5 µm or more, or preferably 10 µm or more. A gap between the terminals 6 is, for example, 5 µm or more, or preferably 10 µm or more.

As shown in FIG. 1A, the two pieces of wired circuit boards 2 are disposed at spaced intervals to each other in the thickness direction (an up-down direction in FIGS. 1A to 1D). To be specific, the two pieces of wired circuit boards 2 are disposed in opposed relation to each other so that the terminals 6 of the upper-side wired circuit board 2 are disposed in opposed relation to the terminals 6 of the lower-side wired circuit board 2 in the thickness direction. Subsequently, the electrically conductive joining sheet 1 is inserted between the two pieces of wired circuit boards 2.

Next, as shown in FIG. 1B, the electrically conductive joining sheet 1 and the wired circuit boards 2 are laminated. That is, the two pieces of wired circuit boards 2 are brought into closer contact with each other, and each of the wired circuit boards 2 is brought into contact with the electrically conductive joining sheet 1. To be specific, the surfaces of the terminals 6 of the lower-side wired circuit board 2 are brought into contact with the lower-side surface of the electrically conductive joining sheet 1, while the surfaces of the terminals 6 of the upper-side wired circuit board 2 are brought into contact with the upper-side surface of the electrically conductive joining sheet 1. In this manner, a laminate 7 is obtained.

Next, as shown in FIG. 1C, the electrically conductive joining sheet 1 is compression-bonded to the wired circuit boards 2 (a temporarily compression-bonding step), while the laminate 7 is heated at a temperature of less than the melting point of the solder particle 4 and less than the curing temperature of the thermosetting resin. That is, the two pieces of wired circuit boards 2 are pressed toward the electrically conductive joining sheet 1, while the laminate 7 is heated at a lower temperature.

A heating temperature in the temporarily compression-bonding is, for example, 130°C or less, or preferably 125°C or less, and, for example, 30°C or more, or preferably 50°C or more.

A pressure in the temporarily compression-bonding is, for example, 0.5 MPa or more, or preferably 1 MPa or more, and, for example, 15 MPa or less, or preferably 10 MPa or less.

In this manner, the resin component 3 in the electrically conductive joining sheet 1 is softened and the terminals 6 are embedded in the resin component 3 (furthermore, the electrically conductive joining sheet 1). At this time, the solder particles 4 that are present between the terminals 6 are compressed in the up-down direction and at the same time, the resin component 3 that is present between the solder particles 4 and the terminals 6 is pushed out by the solder particles 4, so that the solder particles 4 are brought into direct contact with the terminals 6.

Next, as shown in FIG. 1D, the electrically conductive joining sheet 1 is compression-bonded to the wired circuit boards 2 (a fully compression-bonding step), while the laminate 7 is heated at a temperature of the melting point or more of the solder particle 4 and the curing temperature or more of the thermosetting resin. That is, the two pieces of wired circuit boards 2 are pressed toward the electrically conductive joining sheet 1, while the laminate 7 is heated at a higher temperature.

A heating temperature in the fully compression-bonding is, for example, 140°C or more, or preferably 145°C or more, and, for example, 250°C or less, or preferably 230°C or less.

A pressure in the fully compression-bonding is, for example, 0 MPa or more, or preferably 0.1 MPa or more, and, for example, 10 MPa or less, or preferably 5 MPa or less.

In this manner, the two pieces of wired circuit boards 2 are joined to the electrically conductive joining sheet 1, and the terminals 6 corresponding to the respective wired circuit boards 2 are electrically connected to each other.

That is, the terminals 6 are solder-joined in the thickness direction. To be specific, the solder particles 4 that are compressed between the terminals 6 are melted by heating to form solder joining portions 8 (portions made of a solder material). Meanwhile, the thermosetting resin is thermally cured in the periphery of the solder joining portions 8, so that curing layers 3A that reinforce the solder joining portions 8 are formed. Preferably, the curing layers 3A are in a C-stage state (completely cured state).

At this time, the resin component 3 has an appropriate viscosity at the melting point of the solder particles 4, so that an outflow of the solder particles 4 and the thermosetting resin to the outside (that is, the outside of an electronic component 9) of the two pieces of wired circuit boards 2 is suppressed. Also, the resin component 3 having an appropriate viscosity suppresses excessive wetting and spreading of the solder particles 4 on the joining interfaces. Thus, the thermosetting resin is surely in contact with the front and side surfaces of the terminals 6 other than the solder joining portions 8 in the wired circuit boards 2 and with the interfaces of the boards 5. Thus, the adhesive area of the curing layers 3A with respect to the wired circuit boards 2 can be sufficiently ensured. As a result, the joining strength between the two pieces of wired circuit boards 2 is excellent.

In this manner, the electronic component 9 is obtained.

The solder joining portions 8 are formed into generally rectangular shapes in sectional view. In the solder joining portions 8, slight necks are formed at the center in the thickness direction of the electrically conductive joining sheet 1.

One-side surfaces (front surfaces) in the thickness direction of the solder joining portions 8 are alloy-joined to the surfaces of the upper-side terminals 6. The other-side surfaces (rear surfaces) in the thickness direction of the solder joining portions 8 are alloy-joined to the surfaces of the lower-side terminals 6.

The solder joining portion 8 has a length in the thickness direction of, for example, 1 µm or more, or preferably 2 µm or more, and, for example, 80 µm or less, or preferably 50 µm or less.

The curing layers 3A are present in the periphery of the solder joining portions 8, while adhering to the side surfaces of the terminals 6 and the surfaces of the boards 5 that are exposed from the terminals 6.

The electrically conductive joining sheet 1 formed from the electrically conductive joining composition contains the solder particles 4 and the resin component 3 containing the thermosetting resin and the curing agent, and the viscosity of the resin component 3 at the melting point of the solder particles 4 is 8000 Pa·s or more. Accordingly, at the time of solder joining of the electronic component 9, the solder particles 4 and the resin component 3 do not easily flow out of the electronic component 9. The resin component 3 has an appropriate viscosity, so that excessive wetting and spreading of the solder particles 4 to the interfaces of the boards 5 can be suppressed. As a result, the joining strength of the electronic component 9 can be improved.

Thus, the electronic component 9 produced by the electrically conductive joining sheet 1 has excellent electrically conductive properties and excellent joining strength.

The method for producing the electronic component 9 includes the temporarily compression-bonding step and the fully compression-bonding step. Thus, the inhibition of the solder alloy joining caused by remaining of the resin component 3 between the solder particles 4 and the terminals 6 can be suppressed. Also, the outflow of the resin component 3 that is thermally melted in the fully compression-bonding step to the outside of the electronic component 9 can be suppressed.

In the embodiments in FIGS. 1A to 1D, in the lamination of the wired circuit boards 2 and the electrically conductive joining sheet 1, the electrically conductive joining sheet 1 is inserted between the two pieces of wired circuit boards 2. Alternatively, for example, though not shown, the electrically conductive joining sheet 1 is laminated on the one wired circuit board 2 so that the lower surface of the electrically conductive joining sheet 1 is in contact with the terminals 6 of the wired circuit board 2 and thereafter, the other wired circuit board 2 can be also laminated on the upper surface of the electrically conductive joining sheet 1. That is, the electrically conductive joining sheet 1 and the other wired circuit board 2 can be also sequentially laminated on the one wired circuit board 2.

### Examples

While in the following, the present invention is described in further detail with reference to Examples and Comparative Examples, the present invention is not limited to any of them by no means. The numeral values in Examples shown below can be replaced with the numeral values (that is, the upper limit value or the lower limit value) described in the above-described embodiments.

### Example 1

As described in Table 1, a resin component-containing solvent was prepared by mixing the components of 7.1 parts by volume of an epoxy resin (that is, 1.9 parts by volume of a cresol novolak epoxy resin and 5.2 parts by volume of a bisphenol A epoxy resin), 7.9 parts by volume of a phenol resin, 85.0 parts by volume (solid content) of an acrylic rubber, and 0.5 parts by volume of a thermosetting catalyst.

Next, an electrically conductive joining composition-containing solvent was prepared by mixing an organic acid-coated solder particle (42Sn58Bi, melting point of 138°C) with the prepared resin component-containing solvent so that the volume ratio of the resin component to the solder particle was 95.0 to 5.0 in terms of the solid content.

The prepared electrically conductive joining composition-containing solvent was applied to a board to be then dried at 120°C for two minutes, thereby producing an electrically conductive joining sheet (thickness of 40 µm) in which an electrically conductive joining composition was formed into a sheet shape.

### Example 2

An electrically conductive joining sheet was produced in the same manner as that in Example 1, except that the mixing proportion of the components was changed to that described in Table 1 and a resin component-containing solvent was prepared.

### Comparative Examples 1 to 3

Electrically conductive joining sheets were produced in the same manner as that in Example 1, except that the mixing proportion of the components was changed to that described in Table 1 and resin component-containing solvents were prepared.

### (Viscosity Measurement)

Each of the resin component-containing solvents prepared in Examples and Comparative Examples was dried to obtain a resin component. The dynamic viscosity of the obtained resin component was measured using a dynamic viscoelasticity measuring device under the conditions of a shear mode, a frequency of 0.1 Hz, and a temperature rising rate of 10°C/min. The dynamic viscosity at the melting point (138°C) of the solder particle was defined as the viscosity of the resin component. The results are shown in Table 1.

### (Connecting Strength)

Two pieces of copper electrode boards, each of which was formed with a copper electrode on one-side surface of the board, were prepared. Each of the electrically conductive joining sheets of Examples and Comparative Examples was disposed between the two pieces of copper electrode boards so that both copper electrodes are disposed in opposed relation facing inwardly, and both surfaces of the electrically conductive joining sheet were brought into contact with the surfaces of the copper electrodes of the two pieces of copper electrode boards, thereby obtaining a laminate.

Next, the two pieces of copper electrode boards were pressed toward the electrically conductive joining sheet under the conditions of 120°C, 5 MPa, and 20 seconds (a temporarily compression-bonding step) and thereafter, the two pieces of copper electrode boards were pressed toward the electrically conductive joining sheet under the conditions of 165 to 180°C, 0.25 MPa, and 120 seconds (a fully compression-bonding step), so that the two pieces of copper electrode boards were joined by solder joining.

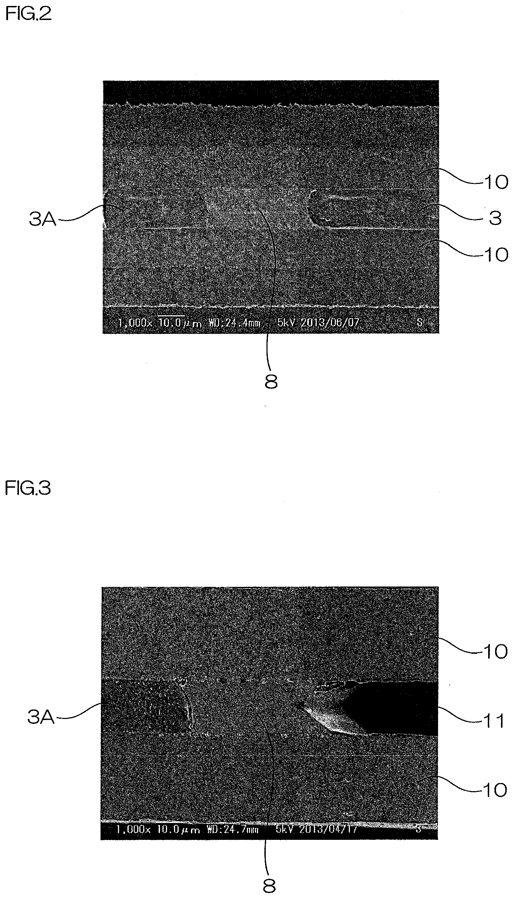

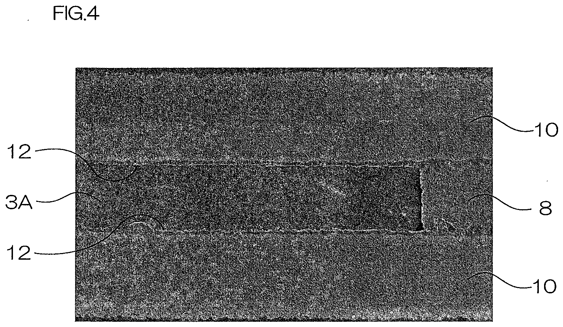

The side sectional area of the obtained joined body was observed with an SEM. The SEM image of Example 1 was shown in FIG. 2, the SEM image of Comparative Example 1 was shown in FIG. 3, and the SEM image of Comparative Example 3 was shown in FIG. 4.

As shown in FIG. 2, a case where the solder joining portion 8 was alloy-joined to copper electrodes 10 in a state of forming a fillet and the periphery of the solder joining portion 8 was surely covered with the resin component 3 (the curing layer 3A) was evaluated as Good. In FIG. 2, the solder joining portion 8 was formed between the two pieces of copper electrodes 10 at a predetermined width (in a right-left direction in FIG. 2), so that the electrically conductive properties were excellent.

As shown in FIG. 3, a case where the outflow of the resin component 3 occurred and a gap 11 occurred in the periphery of the solder joining portion 8, or as shown in FIG. 4, a case where wet portions 12 formed by allowing the solder particles to extremely spread on the surfaces of the copper electrodes 10 were present was evaluated as Bad. That is, in these cases, the area in which the curing layer 3A was direly in contact with the interfaces of the copper electrodes 10 was insufficient, so that the adhesive strength was insufficient. Thus, the joining reliability was poor.

### [Table 1]

**[Table 1]**

| | Component | | Ex. 1 | Ex. 2 | Comp. Ex. 1 | Comp. Ex. 2 | Comp. Ex. 3 |
|---|---|---|---|---|---|---|---|
| Resin | Total Amount of Resin | | 95 | 95 | 95 | 95 | 95 |
| | Epoxy Resin | HP-7200H | 1.9 | 3.9 | 10.9 | 6.4 | 5.8 |
| | | YL-980 | 5.2 | 10.4 | 29.5 | 17.4 | 15.6 |
| | Phenol Resin | MILEX XLC-4L | 7.9 | 15.7 | 44.5 | 26.2 | 23.5 |
| | Acrylic Rubber | Paracron W-116.3* | 85 | 70 | 15 | 50 | 54.7 |
| | Curing Catalyst | TPP-MK | 0.5 | 0.5 | 0.5 | 0.5 | 0.5 |
| Solder | 42Sn58Bi | | 5 | 5 | 5 | 5 | 5 |
| Evaluation | Resin Viscosity [Pa·s] | | 22000 | 14000 | 200 | 4000 | 6400 |
| | Connecting Strength | | Good | Good | Bad | Bad | Bad |

| | | | | | | | |
|---|---|---|---|---|---|---|---|
| * The content ratio in terms of the solid content is shown. | | | | | | | |

Values of components in Table 1 show the number of parts by volume, unless otherwise particularly specified. The details of the components in Table 1 are shown below.
- HP-7200H: cresol novolak epoxy resin, epoxy equivalent of 280 g/eq, manufactured by DIC CORPORATION
- YL-980: bisphenol A epoxy resin, epoxy equivalent of 180 to 190 g/eq, manufactured by JER Co., Ltd.
- MILEX XLC-4L: phenol aralkyl resin, hydroxyl equivalent of 170 g/eq, manufactured by Mitsui Chemicals, Inc.
- Paracron-W116.3: acrylic rubber (acrylate-based polymer mainly composed of ethyl acrylate), manufactured by Negami Chemical Industrial Co., Ltd., Mw of 900000, Tg of 22°C, solid content of 12.7% by volume, solvent: toluene and MEK
- TPP-MK: tetraphenylphosphonium tetra-p-triborate, manufactured by HOKKO CHEMICAL INDUSTRY CO., LTD.
- Solder Particle: 42Sn58Bi, surface covered with an organic acid, average particle size of 35 µm, manufactured by MITSUI MINING & SMELTING CO., LTD.

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### Industrial Applicability

The electrically conductive joining composition and the electrically conductive joining sheet of the present invention can be preferably used for, for example, producing and mounting an electronic component. The electronic component of the present invention can be used for various industrial products such as electronic devices.

### Description of Reference Numerals

- 1: Electrically conductive joining sheet
- 2: Wired circuit board
- 3: Resin component
- 4: Solder particle
- 7: Laminate
- 9: Electronic component

## Claims

1. An electrically conductive joining composition comprising:
a solder particle and a resin component containing a thermosetting resin, a thermoplastic resin, and a curing agent, wherein
the viscosity of the resin component at the melting
point of the solder particle is 8000 Pa·s or more,
the volume content of the thermoplastic resin with respect to the resin component is 60% by volume or more, and
the viscosity is measured by using a dynamic viscoelasticity measuring device under the conditions of a shear mode, a frequency of 0.1 Hz, and a temperature rising rate of 10°C/min.

2. The electrically conductive joining composition according to claim 1, wherein
the thermoplastic resin is an acrylic rubber.

3. The electrically conductive joining composition according to claim 1, wherein
the thermosetting resin is an epoxy resin.

4. The electrically conductive joining composition according to claim 3, wherein
the epoxy resin is a bisphenol epoxy resin and a novolak epoxy resin.

5. The electrically conductive joining composition according to claim 1, wherein
the solder particle has an average particle size of 1 *µ*m or more and 100 *µ*m or less, and
the average particle size is measured by using a laser diffraction scattering particle size distribution meter.

6. The electrically conductive joining composition according to claim 1, wherein
the solder particle is made of a tin-bismuth alloy.

7. An electrically conductive joining sheet, which is obtainable by forming the electrically conductive joining composition according to claim 1 into a sheet shape.

8. The electrically conductive joining sheet according to claim 7, wherein
one solder particle is present in a thickness direction of the electrically conductive joining sheet.

9. A method for producing an electronic component comprising the steps of:
preparing a laminate having the electrically conductive joining sheet according to claim 7 disposed between two pieces of wired circuit boards having the respective terminals disposed in opposed relation at spaced intervals to each other;
compression-bonding the laminate, while heating the laminate at a temperature of less than the melting point of the solder particle and less than the curing temperature of the thermosetting resin; and
compression-bonding the laminate, while heating the laminate at a temperature of the melting point or more of the solder particle and the curing temperature or more of the thermosetting resin.

## Patentansprüche

1. Elektrisch leitfähige Zusammensetzung zum Verbinden, umfassend:
ein Lötteilchen und eine Harzkomponente, die ein wärmehärtendes Harz, ein thermoplastisches Harz und ein Härtungsmittel enthält, wobei
die Viskosität der Harzkomponente am Schmelzpunkt des Lötteilchens 8000 Pa·s oder mehr beträgt,
der Volumenanteil des thermoplastischen Harzes in Bezug auf die Harzkomponente 60 Vol.-% oder mehr beträgt, und
die Viskosität mittels einer Vorrichtung zur Messung der dynamischen Viskoelastizität im Schermodus, bei einer Frequenz von 0,1 Hz und einer Temperaturanstiegsrate von 10°C/min, gemessen wird.

2. Elektrisch leitfähige Zusammensetzung zum Verbinden gemäß Anspruch 1, wobei das thermoplastische Harz ein Acrylgummi ist.

3. Elektrisch leitfähige Zusammensetzung zum Verbinden gemäß Anspruch 1, wobei das wärmehärtende Harz ein Epoxidharz ist.

4. Elektrisch leitfähige Zusammensetzung zum Verbinden gemäß Anspruch 3, wobei das Epoxidharz ein Bisphenol-Epoxidharz und ein Novolak-Epoxidharz ist.

5. Elektrisch leitfähige Zusammensetzung zum Verbinden gemäß Anspruch 1, wobei das Lötteilchen eine mittlere Teilchengröße von 1 µm oder mehr und 100 µm oder weniger aufweist, und die mittlere Teilchengröße mittels einer Laserdiffraktionsvorrichtung zur Bestimmung der Größenverteilung der gestreuten Teilchen gemessen wird.

6. Elektrisch leitfähige Zusammensetzung zum Verbinden gemäß Anspruch 1, wobei das Lötteilchen aus einer Zinn-Bismut-Legierung hergestellt ist.

7. Elektrisch leitfähige Folie zum Verbinden, die durch Formen der elektrisch leitfähigen Zusammensetzung zum Verbinden gemäß Anspruch 1 in eine Folienform erhalten werden kann.

8. Elektrisch leitfähige Folie zum Verbinden gemäß Anspruch 7, wobei ein Lötteilchen in der Dickenrichtung der elektrisch leitfähigen Folie zum Verbinden vorliegt.

9. Verfahren zur Herstellung einer elektronischen Komponente, das die folgenden Schritte umfasst:
Herstellen eines Laminats, bei dem die elektrisch leitfähige Folie zum Verbinden gemäß Anspruch 7 zwischen zwei Stücken von verdrahteten Leiterplatten angeordnet ist, bei denen die jeweiligen Anschlüsse einander gegenüberliegend in Abständen zueinander angeordnet sind;
Kompressionsschweißen des Laminats, während das Laminat auf eine Temperatur erwärmt wird, die unterhalb des Schmelzpunkts des Lötteilchens und unterhalb der Härtungstemperatur des wärmehärtenden Harzes liegt; und
Kompressionsschweißen des Laminats, während das Laminat auf die Schmelzpunkttemperatur des Lötteilchens oder darüber und auf die Härtungstemperatur des wärmehärtenden Harzes oder darüber erwärmt wird.

## Revendications

1. Composition de jonction électriquement conductrice comprenant :
une particule de soudure et un composant de résine contenant une résine thermodurcissable, une résine thermoplastique, et un agent de durcissement, dans laquelle
la viscosité du composant de résine au point de fusion de la particule de soudure est de 8000 Pa·s ou plus,
la teneur en volume de la résine thermoplastique par rapport au composant de résine est de 60% en volume ou plus, et
la viscosité est mesurée en utilisant un dispositif mesurant la viscoélasticité dynamique dans les conditions d'un mode de cisaillement, une fréquence de 0,1 Hz, et une vitesse d'élévation de température de 10°C/min.

2. La composition de jonction électriquement conductrice selon la revendication 1, dans laquelle
la résine thermoplastique est un caoutchouc acrylique.

3. La composition de jonction électriquement conductrice selon la revendication 1, dans laquelle
la résine thermodurcissable est une résine époxy.

4. La composition de jonction électriquement conductrice selon la revendication 3, dans laquelle
la résine époxy est une résine époxy bisphénol et une résine époxy novolak.

5. La composition de jonction électriquement conductrice selon la revendication 1, dans laquelle
la particule de soudure a une taille de particule moyenne de 1 µm ou plus et de 100 µm ou moins, et
la taille de particule moyenne est mesurée en utilisant un analyseur de distribution de taille de particule par diffraction-diffusion laser.

6. La composition de jonction électriquement conductrice selon la revendication 1, dans laquelle
la particule de soudure est faite d'un alliage étain-bismuth.

7. Feuille de jonction électriquement conductrice, qui est obtenue en formant la composition de jonction électriquement conductrice selon la revendication 1 sous la forme d'une feuille.

8. La feuille de jonction électriquement conductrice selon la revendication 7, dans laquelle
une particule de soudure est présente dans une direction d'épaisseur de la feuille de jonction électriquement conductrice.

9. Procédé de production d'un composant électronique comprenant les étapes de :
préparation d'un stratifié ayant la feuille de jonction électriquement conductrice selon la revendication 7 disposée entre deux pièces de cartes de circuit imprimé ayant leurs terminaux respectifs disposés en relation opposé à des intervalles espacés l'un par rapport à l'autre ;
liaison par compression du stratifié, tout en chauffant le stratifié à une température inférieure au point de fusion de la particule de soudure et inférieure à la température de durcissement de la résine thermodurcissable ; et
liaison par compression du stratifié, tout en chauffant le stratifié à une température du point de fusion ou supérieure de la particule de soudure et la température de durcissement ou supérieure de la résine thermodurcissable.
